Europäisches Patentamt

European Patent Office

Office européen des brevets

(19)

(11) Numéro de publication : **0 183 979**
**B1**

(12) # FASCICULE DE BREVET EUROPÉEN

(45) Date de publication du fascicule du brevet :
27.07.88

(51) Int. Cl.⁴ : **C 03 B 37/014**

(21) Numéro de dépôt : 85113711.7

(22) Date de dépôt : 29.10.85

(54) Dispositif de dépoussiérage d'atmosphère autour d'un tube.

(30) Priorité : 31.10.84 FR 8416689

(43) Date de publication de la demande :
11.06.86 Bulletin 86/24

(45) Mention de la délivrance du brevet :
27.07.88 Bulletin 88/30

(84) Etats contractants désignés :
CH DE FR GB IT LI NL SE

(56) Documents cités :
US-A- 4 317 667
US-A- 4 390 357

(73) Titulaire : **COMPAGNIE LYONNAISE DE TRANSMIS-
SIONS OPTIQUES Société anonyme dite:**
**170, Quai de Clichy**
**F-92111 Clichy (FR)**

(72) Inventeur : **Gerault, Patrice**
**92, rue de la République**
**F-92800 Puteaux (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

EP 0 183 979 B1

## Description

La présente invention concerne un dispositif de dépoussiérage d'atmosphère autour d'un tube chauffé extérieurement, sur la surface interne duquel s'effectue un dépôt à partir d'une phase vapeur, par insufflation autour du tube d'un flux d'air laminaire.

On a déjà proposé dans le document US-A-4390357 un dispositif de dépoussiérage d'atmosphère autour d'un appareil d'étirage d'une préforme en une fibre optique, insufflant des flux d'air laminaire dans des enceintes successives entourant la préforme, la fibre optique nue, puis la fibre optique munie d'un revêtement protecteur. La seule insufflation d'un flux d'air linéaire sur l'un des côtés de la préforme, comme décrit dans ce document, ne peut assurer une protection suffisante d'une préforme tubulaire en cours de traitement de dépôt interne, pendant lequel la préforme est chauffée périodiquement de l'une à l'autre de ses extrémités, et toute impureté contenue dans l'atmosphère ambiante risque de se déposer sur la surface extérieure de la préforme, en entraînant des hétérogénéités dans sa structure et dans sa résistance mécanique.

La présente invention a pour but de procurer un dispositif de dépoussiérage d'atmosphère autour d'un tube, qui permette de protéger de façon pratiquement parfaite la surface externe du tube contre le dépôt de toute impureté, et qui assure dans le cas de préformes de fabrication de fibres optiques par étirage une structure très régulière de la fibre optique.

Le dispositif selon l'invention est caractérisé en ce qu'il comporte des organes d'insufflation d'air laminaire dans des plans parallèles à l'axe du tube, de part et d'autre de celui-ci, et des organes d'insufflation d'air perpendiculairement à l'axe du tube, de part et d'autre de celui-ci.

Lorsque le tube est d'axe horizontal, selon une variante préférée de l'invention, les organes d'insufflation d'air laminaire dans des plans parallèles à l'axe du tube sont orientés du bas vers le haut.

Le dispositif de l'invention comporte de préférence en outre près des extrémités du tube des orifices d'insufflation d'air obliquement par rapport à l'axe du tube, et d'inclinaison dirigée vers la zone centrale du tube. Cette inclinaison est de préférence réglable.

Il est décrit ci-après, à titre d'exemple et en référence aux 5 figures du dessin annexé, un dispositif de dépoussiérage d'atmosphère autour d'une préforme tubulaire destinée à la fabrication d'une fibre optique, chauffée extérieurement et à l'intérieur duquel sont introduits des gaz réactifs permettant le dépôt sur sa paroi interne d'éléments dopants assurant une variation radiale de l'indice de réfraction selon une loi déterminée.

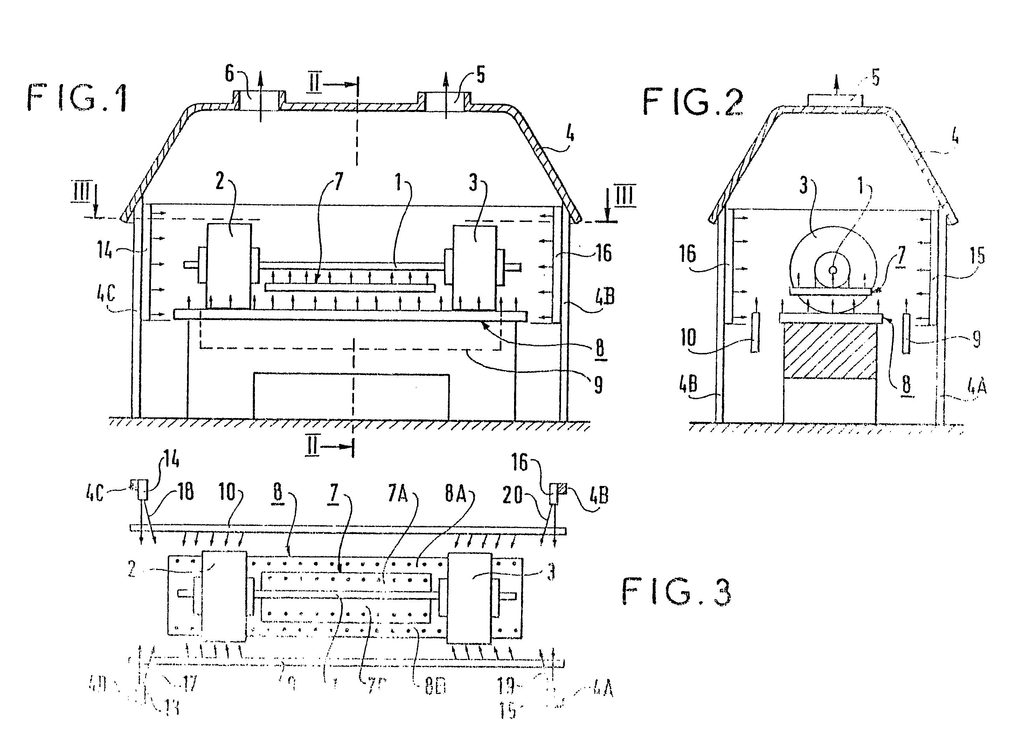

La figure 1 représente schématiquement le dispositif en élévation latérale.

La figure 2 est une coupe selon l'axe II-II de la figure 1.

La figure 3 est une coupe selon l'axe III-III de la figure 1.

Le tube 1 en silice ou en verre destiné à constituer la préforme repose à ses extrémités sur des paliers disposés dans des supports 2, 3 et munis d'organes d'entraînement en rotation, l'ensemble formant un tour verrier. Les conduits d'alimentation de l'intérieur du tube en gaz réactifs, ainsi que l'organe mobile de chauffage de la surface externe du tube, tel qu'un brûleur à gaz, n'ont pas été représentés pour plus de clarté. Le tube et les organes d'alimentation en air dépoussiéré, qui vont être décrits ci-après, sont disposés sous une hotte 4 de forme générale rectangulaire supportée par des piliers tels que 4A, 4B, 4C, 4D. Cette hotte est munie d'orifices 5, 6 d'évacuation 25 de l'air de dépoussiérage et des gaz de combustion du brûleur.

La hotte peut éventuellement être double, une première hotte étant disposée au-dessus de la partie centrale du tour verrier et la seconde plus large que la première, étant destinée à recevoir l'air de protection le plus éloigné de part et d'autre du tube en cours de traitement.

Un premier coffrage 7 est percé d'orifices formant des rampes 7A, 7B d'alimentation en air dépoussiéré disposées de part et d'autre et à proximité du tube, parallèlement à son axe, tout le long de la zone soumise au chauffage. Les ouvertures d'insufflation sont dirigées à la verticale. Il est alimenté en air dépoussiéré par filtration, de la qualité dite "de classe 100", voire meilleure, définie dans la norme américaine N° 209B du 24 avril 1973. Cet air est insufflé en écoulement laminaire, à une vitesse d'environ 0,4 à 0,5 m/s.

Pour parfaire la protection du tube entre les impuretés, un second coffrage 8 est percé d'orifices formant des rampes 8A, 8B d'alimentation en air dépoussiéré en écoulement laminaire vertical, disposées également de part et d'autre du tube, parallèlement à son axe, mais à plus grande distance, et s'étendant jusqu'au-delà des supports des paliers. La protection apportée par le premier coffrage peut cependant souvent suffire.

La protection du tube est renforcée par des caissons longitudinaux 9 et 10 ainsi que des grilles latérales perforées 13, 14, 15, 16 d'insufflation d'air dépoussiéré perpendiculairement a l'axe du tube, de part et d'autre de celui-ci. Ces caissons et grilles sont alimentés en air par les conduits verticaux 13', 14', 15', 16'. La vitesse d'insufflation de l'air par ces grilles est plus élevée, de sorte que son écoulement est turbulent. Aux extrémités de ces grilles, des buses orientables permettent de diriger une partie du flux obliquement par rapport à l'axe du tube, avec un certain angle d'inclinaison vers sa zone centrale, de façon à éviter toute pénétration d'air non dépoussiéré par les extrémités du tour verrier, comme représenté schématiquement par les flèches 17, 18, 19, 20.

On comprendra que l'invention s'applique également lorsque le tube destiné à former la préforme est disposé verticalement, les jets d'air laminaire étant alors horizontaux.

**Revendications**

1. Dispositif de dépoussiérage d'atmosphère autour d'un tube (1) chauffé extérieurement, sur la surface interne duquel s'effectue un dépôt à partir d'une phase vapeur, par insufflation autour du tube de flux d'air laminaire dépoussiéré, caractérisé en ce qu'il comporte des organes d'insufflation d'air laminaire (7, 8, 9, 10) dans des plans parallèles à l'axe du tube, de part et d'autre de celui-ci, et des organes (13, 14, 15, 16) d'insufflation d'air perpendiculairement à l'axe du tube, de part et d'autre de celui-ci.

2. Dispositif selon la revendication 1, dans lequel le tube est d'axe horizontal, caractérisé en ce que les organes d'insufflation d'air laminaire (7, 8, 9, 10) dans des plans parallèles à l'axe du tube sont orientés du bas vers le haut.

3. Dispositif selon les revendications 1 ou 2, caractérisé en ce qu'il comporte en outre près des extrémités du tube des orifices d'insufflation d'air obliquement (17, 18, 19, 20) par rapport à l'axe du tube, et d'inclinaison dirigée vers la zone centrale du tube.

4. Dispositif selon la revendication 3, caractérisé en ce que les orifices d'insufflation d'air obliquement par rapport à l'axe du tube sont d'inclinaison réglable.

**Claims**

1. An apparatus for removing dust from the atmosphere around an externally-heated tube (1) having a deposit being made on its inside surface from a vapour phase, said dust being removed by insufflation of a laminar flow of dust-free air around the tube, characterized in that it comprises meters for laminar air insufflation (7, 8, 9, 10) in parallel planes to the axis of the tube and on either side thereof, and members for air insufflation (13, 14, 15, 16) perpendicularly to the axis of the tube and on either side thereof.

2. An apparatus according to claim 1, wherein the axis of the tube extends horizontally, characterized in that the members for laminar air insufflation (7, 8, 9, 10) in parallel planes to the axis of the tube are upwardly directed.

3. An apparatus according to claim 1 or 2, characterized in that it further comprises, close to the ends of the tube, orifices (17, 18, 19, 20) for insufflating air obliquely relative to the axis of the tube and inclined towards the central zone of the tube.

4. An apparatus according to claim 3, characterized in that the orifices for insufflating air obliquely relative to the axis of the tube are of adjustable inclination.

**Patentansprüche**

1. Anlage zur Entstaubung der Atmosphäre um ein von außen beheiztes Rohr (1), an dessen Innenfläche ein Niederschlag aus einer Gasphase erzeugt wird, wobei die Entstaubung durch Umblasen des Rohres mit einer laminaren Strömung entstaubter Luft erfolgt, dadurch gekennzeichnet, daß sie Organe (7, 8, 9, 10) zum laminaren Einblasen von Luft in parallelen Ebenen zur Rohrachse und zu beiden Seiten derselben, sowie Organe (13, 14, 15, 16) zum Einblasen von Luft senkrecht zur Achse des Rohrs und zu beiden Seiten desselben aufweist.

2. Anlage nach Anspruch 1, in welcher das Rohr horizontal verläuft, dadurch gekennzeichnet, daß die Organe (7, 8, 9, 10) zum laminaren Einblasen von Luft in parallelen Ebenen zur Rohrachse nach oben gerichtet sind.

3. Anlage nach einem der Ansprüche 1 oder 2, dadurch gekennzeichnet, daß weiterhin in der Nähe der Rohrenden Öffnungen (17, 18, 19, 20) zum Einblasen von Luft in gegen die Rohrachse geneigter Richtung vorgesehen sind, wobei die Neigung auf die zentrale Rohrzone gerichtet ist.

4. Anlage nach Anspruch 3, dadurch gekennzeichnet, daß die Öffnungen zum Einblasen von Luft in zur Rohrachse geneigter Richtung in ihrer Neigung einstellbar sind.

FIG.1

FIG.2

FIG.3

0 183 979